Europäisches Patentamt

(19) European Patent Office

Office européen des brevets

(11) EP 0 701 862 A1

(12) EUROPEAN PATENT APPLICATION
published in accordance with Art. 158(3) EPC

(43) Date of publication:
20.03.1996 Bulletin 1996/12

(51) Int. Cl.⁶: **B01J 19/12**, B01J 19/10

(86) International application number: PCT/JP94/00756

(21) Application number: 94914600.5

(22) Date of filing: 10.05.1994

(87) International publication number:
WO 94/26408 (24.11.1994 Gazette 1994/26)

(84) Designated Contracting States:
DE FR GB NL

(30) Priority: 11.05.1993 JP 109378/93

(71) Applicant: SRL, INC.
Tachikawa-shi, Tokyo 190 (JP)

(72) Inventors:
• HIRABAYASHI, Yohji,
Hachioji Lab. of SRL, Inc.
Tokyo 192 (JP)
• KUBONO, Katsuo,
Hachioji Lab. of SRL, Inc.
Tokyo 192 (JP)

• BOON, Mathilde, E.
NL-9304 TN Lieveren (NL)
• KOK, Lambrecht, P.
NL-9304 TN Lieveren (NL)

(74) Representative: Kirschner, Kıaus Dieter, Dipl.-
Phys.
Patentanwälte
Herrmann-Trentepohl, Kirschner,
Grosse, Bockhorni & Partner
Forstenrieder Allee 59
D-81476 München (DE)

(54) MICROWAVE IRRADIATION METHOD AND MICROWAVE IRRADIATION DEVICE

(57) A microwave irradiation device comprises a microwave irradiation chamber and a microwave generating source for supplying microwave to the microwave irradiation chamber. When microwave irradiation is carried out in the microwave irradiation chamber to cause reaction in a liquid medium, the reaction in the liquid medium is expedited and uniformized with a quantitative feature maintained by the use of a microwave irradiation device, in which at least one inner surface of the microwave irradiation chamber is uneven.

*Fig. 4*

## Description

### Technical Field

The present invention relates to a microwave irradiation method capable of uniformly accelerating (or promoting) a reaction in a liquid medium, and to a microwave irradiation apparatus which is suitably usable for such a method.

### Background Art

Heretofore, when a reaction is conducted in a liquid medium, there have been used several methods such as: (1) a method wherein the reaction is conducted at room temperature; (2) a method wherein the reaction is conducted in an incubator utilizing a heating medium such as air and metal; or (3) a method wherein the reaction is conducted in a constant-temperature bath (or thermostatic device) utilizing a heating medium such as liquid and oil. In these methods, the reaction is caused or accelerated by supplying heat to an object (or target) to be heated through the heating medium of air, water and oil.

On the other hand, heretofore, a heating method utilizing microwave has also been used. In such a heating method utilizing microwave, radio wave penetrates into the interior of an object to be heated in accordance with the characteristic of the object thereby to provide a high-frequency electric field and magnetic field. In such a manner, dipoles in the molecules of the object are caused to rotate and vibrate, and heat is generated on the basis of the resultant internal friction therein.

Microwave heating has widely been used in the industrial world. In the food industry, rubber industry, woodworking industry, etc., microwave is utilized for the purpose of desiccation, sterilization or disinfection, or processing or treatment. In addition, in the medical field, the utilization of microwave has been developed for the purpose of treatment or cure (so-called "hyperthermia"). In the field of clinical examination or test, the utilization of microwave irradiation has been developed in a step of preparing specimens for pathological examination (i.e., for a qualitative purpose), and such utilization of microwave irradiation contributes to the speed-up of the pathological examination.

However, there has never been known a conventional example wherein microwave irradiation is utilized for a reaction in a liquid medium, etc., which is required to have a quantitative property.

In the prior art, the reaction in a liquid medium using conventional heating methods requires a long period of time. In addition, even when the above-mentioned liquid medium is simply irradiated with microwave, the reproducibility or uniformity in the reaction is rather deteriorated so that the quantitative property of the reaction rather tends to be impaired, although the resultant reaction rate can be increased (i.e., the speed-up of the reaction can be accomplished).

An object of the present invention is to provide a microwave irradiation method which is capable of accelerating and uniformizing a reaction in a liquid medium, while maintaining a good quantitative property of the reaction.

Another object of the present invention is to provide a microwave irradiation apparatus which is suitably usable for the above-mentioned microwave irradiation method.

### Disclosure of Invention

As a result of the present inventors' earnest study, it has been found to be extremely effective in achieving the above object to irradiate a liquid medium with microwave while using a microwave irradiation chamber having at least one inside surface with unevenness (or indentations and protrusions) and causing at least a portion of the microwave to reflect on the uneven surface, instead of simply irradiating the liquid medium with microwave.

The microwave irradiation method according to the present invention is based on the above discovery. The present invention provides a microwave irradiation method wherein a reaction in a liquid medium is conducted while irradiating the liquid medium with microwave in a microwave irradiation chamber, by means of a microwave irradiation apparatus having the microwave irradiation chamber and a microwave-generating source for supplying microwave to the microwave irradiation chamber; at least one face constituting the inside of the microwave irradiation chamber of the microwave irradiation apparatus comprising an uneven surface.

The present invention also provides a microwave irradiation apparatus, comprising:

a microwave irradiation chamber having at least one opening; and

a microwave-generating source for supplying microwave to the microwave irradiation chamber;

wherein at least one face constituting the inside of the microwave irradiation chamber comprises an uneven surface.

The present invention further provides a microwave irradiation apparatus, comprising:

a main body having an openable door disposed in a front opening thereof; and

a microwave-generating source for supplying microwave to a microwave irradiation chamber provided in the main body;

wherein at least one face constituting the inside of the microwave irradiation chamber comprises an uneven surface.

In the microwave irradiation method according to the present invention, for example, it is preferred that a machined or processed metal material provided with unevenness is disposed or attached onto the internal surface of the microwave irradiation chamber constituting the microwave irradiation apparatus, and the object (liquid medium) is irradiated with microwave in such a microwave irradiation chamber. In this case, the microwave is reflected on the metal surface (uneven surface). As the degree of the unevenness of the metal surface is increased, the reflection of the microwave becomes more random, and as a result, the object is irradiated with the microwave equally or thoroughly. In the present invention, based on the thus uniformized irradiation of the microwave, the acceleration and uniformization of the reaction in the liquid medium, as well as the preservation or maintenance of a good quantitative property, may be achieved.

**Brief Description of Drawings**

Fig. 1 is a schematic perspective view showing an example of the apparatus for measuring the intensity of scattered light based on an uneven member.

Fig. 2 is a schematic sectional view showing an example of the apparatus for measuring the intensity of scattered light based on the uneven member.

Fig. 3 is a schematic perspective view showing an example of the microwave irradiation apparatus which is usable for the microwave irradiation method according to the present invention.

Fig. 4 is a schematic plan view showing the microwave irradiation apparatus used in the Examples appearing hereinafter.

Fig. 5 is a schematic side view showing the microwave irradiation apparatus used in the Examples.

Fig. 6 is a schematic front view showing the microwave irradiation apparatus used in the Examples.

**Best Mode for Carrying Out the Invention**

Hereinbelow, the present invention will be described in detail with reference to the accompanying drawings as desired.

(Microwave irradiation apparatus)

In the present invention, there is used a microwave irradiation apparatus, which comprises: at least, a microwave irradiation chamber, and a microwave-generating source for supplying microwave to the microwave irradiation chamber. At least one side of the above microwave irradiation chamber may preferably be equipped with a door so that the door is openable and closable as desired.

(Microwave-generating source)

As the above microwave-generating source, it is possible to use a source to be used for ordinary microwave heating such as magnetron. The electric power consumption for the above microwave-generating source may preferably be 100 to 3,000 W (watt), more preferably 200 to 1,500 W. The frequency of microwave to be supplied from the microwave-generating source may preferably be 0.5 - 600 GHz, more preferably 0.5 - 40 GHz (particularly, 0.9 - 25 GHz).

(Microwave irradiation chamber)

The dimensions of the above microwave irradiation chamber are not particularly limited. In view of the balance with the microwave-generating source, or in view of the efficiency or uniformity of the microwave processing, or in view of a container or vessel accommodating the liquid medium, etc., the dimensions may preferably be about 5 - 200 cm in length, about 10 - 200 cm in width, and about 10 - 200 cm in depth.

The face (or side) of the microwave irradiation chamber which is provided with the above microwave-generating source is denoted by "Face-A", the face disposed opposite to the Face-A is denoted by "Face-B", the face which is to be optionally provided with the above door is denoted by "Face-C", and the face disposed opposite to the Face-C is denoted by "Face-D". Between the remaining two faces, the face disposed on the left side as viewed from the Face-C side is denoted by "Face-E", and the face disposed on the right side as viewed from the Face-C side is denoted by "Face-F". Under the above designation, according to the present inventor's experiments, it has been found that the effect of the provision of the uneven surface as described hereinafter is decreased according to a descending order of $A \geqq C \geqq D \geqq E, F > B$.

In the present invention, at least one surface of the inside (i.e., an interior in which an object to be irradiated with microwave is disposed) of the above microwave irradiation chamber comprises an uneven surface. In view of uniformity in the microwave processing, the number of faces to be provided with the uneven surface may preferably be 2 or more, more preferably 3 or more.

(Uneven surface)

As described above, at least one surface of the inside of the above microwave irradiation chamber comprises an uneven surface. The degree of the unevenness of the above uneven surface is not particularly limited, as long as it may contribute to an improvement in the uniformity of the microwave irradiation. The degree of the unevenness of the uneven surface may preferably be 1.25 or more, more preferably 1.3 or more (particularly preferably 1.4 or more), in terms of the intensity ratio of scattered light relative to a smooth surface (a surface having a finish degree of 400 according to Japanese Industrial Standard).

For example, the above intensity ratio of scattered light can be measured by utilizing a measuring device as described hereinbelow.

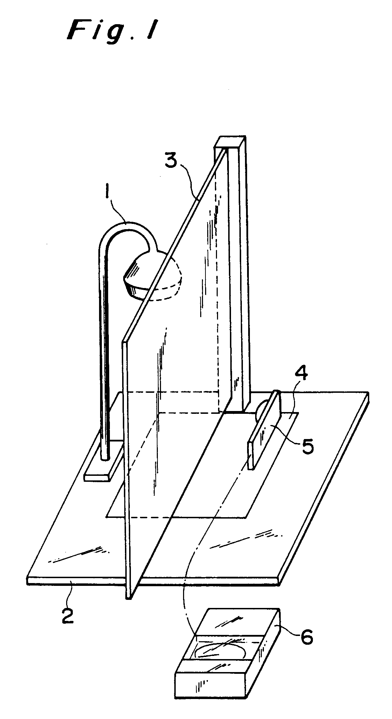

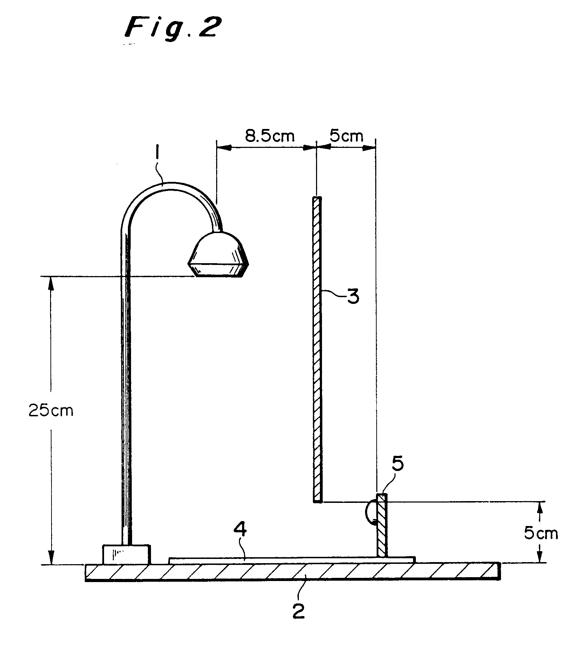

Thus, referring to Fig. 1 (perspective view) and Fig. 2 (front sectional view), a light source 1 (OM-System, 100 V-lamp, MAX 500 W) is disposed at a position which is 25 cm upward away from a measurement table (i.e., a surface on which an object to be measured is to be disposed) 2, and is 8.5 cm leftward away from a shielding plate 3 (i.e., light shield plate comprising a corrugated board plate having a length of 40 cm, a width of 60 cm, and a thickness of about 0.7 cm). The shielding plate 3 is disposed substantially vertically, upward from the measurement table 2. On the measurement table 2, an object 4 of which surface roughness is to be measured is disposed. On the other hand, at a position on the object 4 to be measured which is 5 cm rightward away from the above shielding plate 3, a light-receiving element 5 (YEW Type 3281, mfd. by Yokogawa Electric Corporation) is disposed so that the light-receiving face thereof is disposed perpendicularly to the surface of the measurement table 2. The light-receiving element 5 is electrically connected to a meter 6. The light source 1 and light-receiving element 5 are arranged so that the straight line connecting these members is substantially perpendicular to the surface of the shielding plate 3.

The measuring device as shown in Fig. 1 is constituted so that the light emitted from the light source 1 is not directly incident on the light-receiving element 5 due to the above shielding plate 3. On the other hand, when the light emitted from the light source 1 is reflected on the object 4 to be measured, the resultant scattered light passes through the clearance (5 cm) between the object 4 to be measured and the shielding plate 3, and then is incident on the light-receiving element 5. As the surface roughness (i.e., the degree of the unevenness) of the object 4 to be measured is increased, the quantity of light which is incident on the light-receiving element 5 is increased. Accordingly, the quantity of the light (illuminance by reflected light) which is incident on the light-receiving element 5 may be used as an indication of the surface roughness of the object 4 to be measured.

(Embodiments of microwave irradiation apparatus)

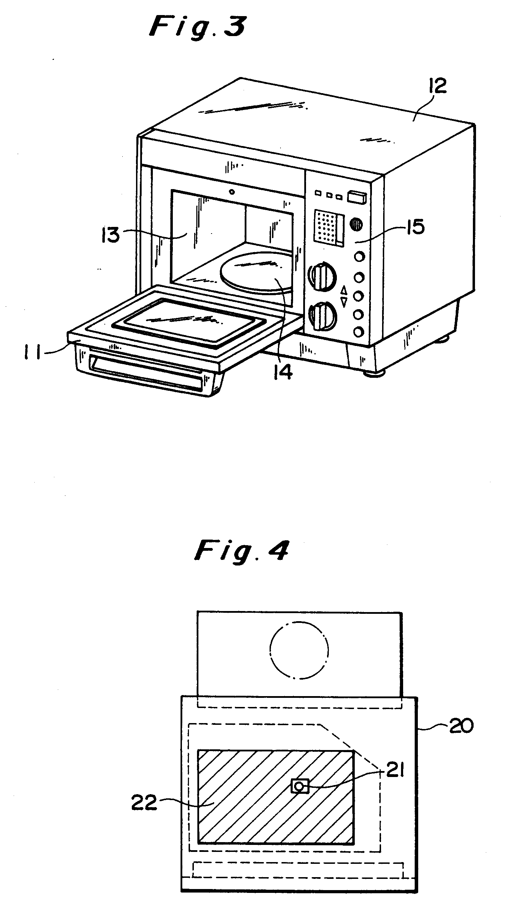

An embodiment of the microwave irradiation apparatus to be suitably usable in the present invention is shown in the perspective view of Fig. 3. Referring to Fig. 3, this microwave irradiation apparatus comprises: at least, a main body 12 of which front opening is equipped with a door 11 so that the door 11 is openable and closable as desired; a microwave-generating source (not shown) for supplying microwave to a microwave irradiation chamber 13 provided in the inside of the main body 12, wherein at least one internal face of the above microwave irradiation chamber 13 comprises an uneven surface. In the microwave irradiation chamber 13, it is possible to provide a turn table or shaking table as desired, and to rotate or shake the object to be irradiated (not shown). In Fig. 3, Reference Numeral 15 denotes a console panel equipped with a switch, a thumbscrew, etc., which is necessary for the operation of the microwave irradiation apparatus.

As the above-mentioned microwave irradiation apparatus, it is possible to use an apparatus which has been obtained by modifying a ready-made or commercially available microwave irradiation apparatus (inclusive of a microwave oven for domestic use) so that at least one internal face of the microwave irradiation chamber thereof is provided with an uneven surface. For example, a microwave processing apparatus BIO-RAD H2500 mfd. by Nihon Bio-Rad Laboratories Co. may preferably be used as such a commercially available microwave irradiation apparatus.

In the above embodiment shown in Fig. 3, the microwave irradiation chamber has one opening on the front side thereof (the number of the inner walls constituting the microwave irradiation chamber is five), but the position of the opening may also be on the lower side in Fig. 3. Further, the microwave irradiation chamber may also has two or three openings as desired. More specifically, for example, the microwave irradiation chamber (in Fig. 3) may also have two openings located on the front and rear sides thereof (the number of the inner walls constituting the microwave irradiation chamber is four), or for example, the microwave irradiation chamber (in Fig. 3) nay also have three openings located on the front, rear and lower sides thereof (the number of the inner walls constituting the microwave irradiation chamber is three). When the number of the openings is increased in such a manner, for example, it is possible that an object to be irradiated with microwave is placed on a conveying means such as belt conveyer which may be driven continuously or intermittently, and the object to be irradiated is irradiated with microwave continuously or intermittently, whereby the microwave irradiation in a manner like "assembly line" may be facilitated.

(Formation of uneven surface)

When the above-mentioned at least one inner face of the microwave irradiation chamber is made uneven, it is possible to attach or bond an uneven member (such as metal plate and aluminum foil) having an uneven surface to the predetermined inner face of a ready-made microwave irradiation apparatus. Alternatively, it is also possible to constitute the microwave irradiation chamber by using an uneven member of which surface has been made uneven in advance.

In a case where the uneven member is attached, in view of the prevention of discharge based on the microwave irradiation, it is preferred to dispose an insulator (e.g., a plastic material such as soft plastic) between the uneven member and the inner face of the microwave irradiation chamber. The insulator may preferably have a thickness of about 5 $\mu$m to 20 mm. In view of effective prevention of the discharge, the dimension or size of the insulator may preferably be somewhat larger than that of the uneven member. More specifically, the insulator may preferably have a size such that it may provide a margin or flange of 1 mm or more (more preferably about 2 mm - 10 mm) along each face of the insulator when the insulator is attached to the uneven member.

Further, in view of the protection or the shape of the uneven member, easiness in the machining or processing thereof, etc., it is possible to coating the upper surface of the uneven member with a thin coating of a substance having a small relative dielectric constant $\varepsilon_r$ and a small dielectric loss angle tan $\delta$. As the above coating material, it is preferred to use a substance having a product (loss factor) of (relative dielectric constant $\varepsilon_r$) $\times$ (dielectric loss angle $\delta$) of 0.1 or less, more preferably 0.01 or less (particularly preferably 0.001 or less). More specifically, for example, it is possible to use pottery or ceramic (loss factor = about $850 \times 10^{-4}$), glass (about $500 \times 10^{-4}$), polystyrene (about $5.2 \times 10^{-4}$), polytetrafluoroethylene (about $4 \times 10^{-4}$), etc., as the coating material. The thickness of above coating may preferably be 5 mm or less, more preferably 3 mm or less (particularly preferably 1 mm or less). The thickness may preferably be 0.01 $\mu$m or more, more preferably 0.1 $\mu$m or more (particularly preferably 1 $\mu$m or more).

(Liquid medium)

The liquid medium to be used in the present invention is not particularly limited as long as it is substantially in a liquid or fluid state at the temperature for the microwave processing. In view of the application of the present invention to a biochemical reaction, it is preferred to use a liquid medium comprising water as a main component (preferably, a liquid medium comprising 10 wt.% or more of water, more preferably 20 wt.% or more of water, based on the weight of the liquid component constituting the liquid medium). The liquid medium may also be retained in a matrix having a crosslinking structure (such as gel structure) or in a porous substance (such as paper and porous plastic), as long as the matrix or porous substance may retain therein the liquid medium comprising water, etc.

(Reaction in liquid medium)

The microwave irradiation method according to the present invention may preferably be used for a reaction having a purpose of quantitatively determining an object to be measured (or a component contained in the object). In the present invention, the reaction to be conducted in a liquid medium may usually be a chemical reaction, but the reaction may preferably be a biochemical reaction in a case where a liquid medium comprising water as a main component is used. Specific examples of such a biochemical reaction may include, e.g., an antigen-antibody reaction (such as immunological reaction), an enzyme-substrate reaction (such as color-forming reaction utilizing an enzyme), a reaction for providing a solid-phase product, an inactivation or deactivation reaction (such as inactivation reaction of a complement), an agglutination reaction, etc.

Among the above biochemical reactions, in view of the reproducibility of the measured value, it is usually preferred to use a reaction utilizing the specificity of an enzymatic reaction or an antigen-antibody reaction. It is particularly preferred to use an immunological measurement method utilizing an antigen-antibody reaction (such as immunoassay), etc.

As the above immunological measurement method, it is possible to utilize a radioimmunoassay (RIA), an enzyme immunoassay (EIA), a fluoroimmunoassay (FIA), a chemiluminescence immunoassay (CLIA), etc. In order to easily obtain a high sensitivity, it is preferred to use the fluoroimmunoassay, particularly a time-resolved fluoroimmunoassay (TR-FIA).

In the time-resolved fluoroimmunoassay, it is preferred to use an antibody labelled with europium (Eu). In such an embodiment, it is preferred that at the time of the fluorescence measurement, $Eu^{3+}$ is released or liberated from the Eu-labelled antibody, and an Eu-chelate is caused to be produced in a liquid. The Eu-chelate has fluorescent characteristics such that it may provide fluorescence having a long wavelength (615 nm), a large difference between the fluorescence wavelength and the excitation light wavelength (340 nm), and a long fluorescence lifetime (1000 $\mu$sec or longer), and it may also provide a fluorescence intensity which is stronger than that of $Eu^{3+}$ alone. Accordingly, in such a case, it becomes possible to effect a measurement having a high sensitivity and a low background (that due to scattered excitation light or a co-present protein).

In addition, in the above embodiment, it is preferred to effect measurement (time-resolved measurement) by utilizing the above-mentioned long fluorescent lifetime of the Eu-chelate, after the disappearance of the background due to the co-present protein, etc. In this case, in view of the provision of a high sensitivity and a wide measurement range, for example, it is preferred to effect the time-resolved measurement at a frequency of about 100 - 1000 times/sec per one sample, and the resultant fluorescence intensities are subjected to integration or accumulation.

(Condition for microwave processing)

In the present invention, the microwave processing conditions at the time of the microwave processing, such as temperature and period of time for the microwave processing are not particularly limited. In view of an improvement in the uniformity in the reaction by use of a short-time microwave irradiation, it is preferred to effect microwave irradiation plural times while interposing a shaking operation (inclusive of ultrasonic treatment) therebetween, such as processing in the order of microwave irradiation $\rightarrow$ shaking $\rightarrow$ microwave irradiation.

(Combination with ultrasonic treatment)

In an embodiment of the present invention wherein the microwave processing is combined with ultrasonic treatment, the ultrasonic treatment may be effected simultaneously with the microwave processing (inclusive of a case wherein these processing and treatment have a partial overlapping), or may be effected so that the ultrasonic treatment has no overlapping of time with the microwave processing. In order to facilitate the apparatus design, the above ultrasonic treatment may preferably be effected so that it has no overlapping of time with the microwave processing. In the present invention, the ultrasonic treatment conditions at the time of the ultrasonic treatment, such as temperature and period of time for the ultrasonic irradiation are not particularly limited. In view of an improvement in the uniformity in the reaction by use of short-time microwave irradiation or ultrasonic irradiation, it is preferred to effect the ultrasonic irradiation under the following conditions.

Frequency: 20KHz to 10 GHz (more preferably, 20KHz to 200 MHz)
Output power: 10 W - 3000 W (more preferably, 30 W -1200 W)
Intensity: 0.01 W/cm$^2$ to 10 KW/cm$^2$ (more preferably, 0.1 W/cm$^2$ to 1 KW/cm$^2$)
Time for treatment: 1 second to 3600 seconds (more preferably, 10 seconds to 120 seconds)
In addition, in the microwave processing according to the present invention, it is possible to combine therewith a heating treatment as desired.

Hereinbelow, the present invention will be described in more detail by way of Examples, by which the present invention should not be limited at all.

Examples

Example 1

(Processing of metal plate to be attached to inner wall of microwave irradiation apparatus)

Stainless steel plates (dimension: 21.1 cm × 27.1 cm, thickness: 0.1 cm) were provided, and they were machined by a finishing process according to Japanese Industrial Standard relating to the degree of finishing or a metal plate (JIS R 6001 (size of particles); JIS R 6251 (buff)) so as to provide surface finishing degrees of (1) 2B (untreated), (2) 100, (3) 200, (4) 300 and (5) 400, respectively. Further, the thus prepared stainless steel plates having various surface roughnesses were separately machined so that their surfaces were provided with a grid- or lattice-like pattern having an interval of 4 mm or 8 mm.

Separately, a commercially available aluminum foil (aluminum foil having a thickness of 15 μm, mfd. by San Alum Kogyo K.K.) was modified by use of hands so that the surface thereof was provided with random unevenness. More specifically, the above aluminum foil was cut to provide a foil having sizes of a length of 20 cm and a width of 35 cm or more, was placed on a flat surface, and was slowly wrinkled by using hands. At this time, the aluminum foil was wrinkled so that the unevenness based on the resultant wrinkles became as uniform and fine as possible.

Each of the thus prepared 16 kinds of metal surfaces inclusive of 15 kinds of metal plates and the aluminum foil which had been provided with unevenness was irradiated with light in the following manner, whereby relationships between the finishing degree of the above metal plates, etc., and the reflection illuminances were investigated.

In the measurement of the above reflection illuminance, a measuring device as shown in the above Figs. 1 and 2 was used. More specifically, the light source 1 was fixed at a position which was at a height of 25 cm upward away from the surface of the measurement table 2 on which the metal plate was to be placed, and was 8.5 cm away from the center line of the measurement table 2. The photometer 5 was placed at a position which was opposite to the light source 1 with respect to the above-mentioned center line, and was 5 cm away from the center line so that the light-receiving face of the photometer 5 was perpendicular to the face of the measurement table 2 on which the metal plate was to be placed. The shielding plate (shield plate against the light from the light source) 3 comprised a corrugated paper plate having a length of about 40 cm and a width of about 60 cm, and was fixed at a position which was above the center line of the measurement table 2 between the light source 1 and the photometer 5, and was at a height of 5 cm away from the face of the measurement table 2 on which the metal plate was to be placed (Fig. 2).

The thus obtained measurement results are shown in the following Table 1. As shown in the above-mentioned Table 1, as the finishing degree of the metal surface was improved (2B → 400), the resultant reflection illuminance was decreased. More specifically, as the finishing degree of the metal surface was improved, the degree of the irregular reflection on the metal surface was decreased, and the light emitted from the light source 1 was less liable to reach the opposite face of the shielding plate 3. On the other hand, the aluminum foil provided with unevenness was showed a maximum reflection illuminance.

(Table 1)

| Finishing degree of stainless face | 2B | 100 | 200 | 300 | 400 |
|---|---|---|---|---|---|
| Untreated | 1750 | 1310 | 1450 | 1350 | 1410 |
| 4mm-grid | 1650 | 1750 | 1800 | 1450 | 1400 |
| 8mm-grid | 1750 | 1550 | 1550 | 1500 | 1400 |
| Treated aluminum foil | 2700 | - | - | - | - |
| (Unit: lux) | | | | | |

Example 2

(Processing of uneven aluminum foil and mounting thereof to inner wall)

A commercially available microwave irradiation apparatus (BIO-RAD H2500 microwave processing apparatus mfd. by Nihon Bio-Rad laboratories Co.) was used, and an aluminum foil provided with unevenness was mounted thereto in the following manner.

① The processing of the aluminum foil and the mounting thereof were conducted in the following manner.

A piece having a length of 20 cm and a width of 35 cm or more was cut from an aluminum foil, and was slowly wrinkled on a flat surface so that the aluminum foil was provided with unevenness while the resultant unevenness was made as uniform and fine as possible. The provision of the unevenness to the aluminum foil was carefully conducted so that no extremely pointed portion of the aluminum foil was provided and no hole was made in the aluminum foil for the purpose of preventing discharge at the time of the microwave irradiation.

Thereafter, the uneven aluminum foil as prepared above was placed on a soft plastic plate (polypropylene resin, trade name: Clear Holder, mfd. by Kokuyo K.K.) having a length of 16.5 cm, a width of 27 cm and a thickness of about 0.1 mm which had been provided in advance, while the uneven aluminum foil was spread by hands. Onto the surface of the soft plastic plate on which the uneven aluminum foil was to be placed, a double-face adhesive tape (trade name: Nicetack, mfd. by NICHIBAN K.K.) had been bonded in advance along each face of the soft plastic plate so that an about 3 mm-wide flange was provided along each of the upper, lower, left and right sides of the soft plastic plate.

A microwave generator was provided on the upper face (Face-A) of the microwave irradiation chamber of the above microwave irradiation apparatus, and therefore a rectangle opening was made at a position of the soft plastic plate which was to coincide with the microwave generator. A double-face adhesive tape was similarly bonded to a portion around the above rectangle opening prepared by the cutting, on the surface of the soft plastic plate on which the uneven aluminum foil was to be placed, so that an about 3 mm-wide flange could be provided. The uneven aluminum foil as prepared above was placed on the thus processed soft plastic plate, and thereafter the aluminum foil was bonded to the soft plastic plate by pressing the aluminum foil side with hands. Then, an excess portion of the uneven aluminum foil was carefully cut with a cutter knife so that an about 3 mm-wide flange remained and the plastic plate per se was not cut off.

Subsequently, a double-face adhesive tape was bonded to the surface of the soft plastic plate which was reverse to the surface onto which the uneven aluminum foil had been bonded in the above-mentioned manner, and the resultant soft plastic plate was mounted to the upper face (Face-A) of the microwave irradiation chamber of the above microwave irradiation apparatus, as shown in the plan view of Fig. 4 (as viewed from the outside of the microwave irradiation apparatus). In Fig. 4, Reference Numeral 20 denotes a main body of the microwave irradiation apparatus, Reference Numeral 21 denotes the above microwave generator, and Reference Numeral 22 denotes a laminate comprising the soft plastic plate and the uneven aluminum foil bonded to the soft plastic plate.

② The processing and mounting of an aluminum foil for a side wall was conducted in the following manner.

A piece having a length of 25 cm and a width of 35 cm or more was cut from an aluminum foil, and processed into an uneven aluminum foil in the same manner as described above. The thus obtained uneven aluminum foil was then bonded to a soft plastic plate having a length of 21.5 cm and a width of 27.5 cm by using a double-face adhesive tape in the same manner as described above, while the uneven aluminum foil was spread by hands. Subsequently, an excess portion of the uneven aluminum foil was cut in the same manner as in the above ① procedure so that an about 3 mm-wide flange remained therebetween.

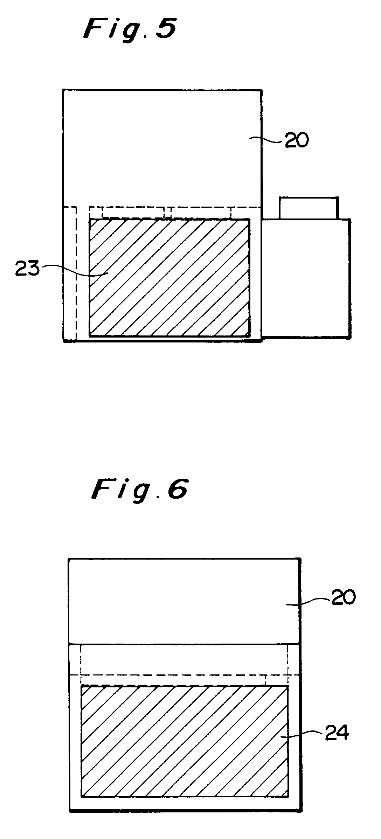

Further, in the same manner as in the above ① procedure, a double-face adhesive tape was bonded to the surface of the soft plastic plate which was reverse to the surface thereof onto which the uneven aluminum foil had been bonded in the above-mentioned manner, and the resultant soft plastic plate was mounted to the right side face (Face-F) of the microwave irradiation chamber of the above microwave irradiation apparatus, as shown in the side view of Fig. 5 (as viewed from the rightward outside of the microwave irradiation apparatus). In Fig. 5, Reference Numeral 23 denotes the soft plastic plate onto which the uneven aluminum foil had been bonded.

③ The processing and mounting of an aluminum foil for a front wall was conducted in the following manner.

A piece having a length of 25 cm and a width of 40 cm or more was cut from an aluminum foil, and processed into an uneven aluminum foil in the same manner as described above. The thus obtained uneven aluminum foil was then bonded to a soft plastic plate having a length of 19.5 cm and a width of 36 cm by using a double-face adhesive tape in the same manner as described above, while the uneven aluminum foil was spread by hands.

Further, in the same manner as in the above ① procedure, a double-face adhesive tape was bonded to the surface of the soft plastic plate which was reverse to the surface thereof onto which the uneven aluminum foil had been bonded in the above-mentioned manner, and the resultant soft plastic plate was mounted to the front side face (Face-C) of the microwave irradiation chamber of the above microwave irradiation apparatus, as shown in the front view of Fig. 6 (as viewed from the front outside of the microwave irradiation apparatus). In Fig. 6, Reference Numeral 24 denotes the soft plastic plate onto which the uneven aluminum foil had been bonded.

Example 3

Microwave irradiation (heating) was conducted by using a commercially available microwave irradiation apparatus of Microwave Processor H2500 mfd. by Nihon Bio-Rad Laboratory K.K.

More specifically, a commercially available aluminum foil was provided with unevenness in the same manner as in Example 2, thereby to provide an uneven aluminum foil. By use of the thus obtained uneven aluminum foil, the reflection illuminance thereof was measured by using the device and arrangement conditions as described in Example 1 (Figs. 1 and 2), and the reflection illuminance was found to be about 2800 lux. Such an uneven aluminum foil was bonded to a soft plastic plate in the same manner as in Example 2, thereby to provide a laminate comprising the uneven aluminum foil and the plastic plate.

The above uneven aluminum foil laminate was mounted to the inner wall of the microwave processor H2500 (hereinafter, referred to as "range"), thereby to provide a microwave irradiation apparatus to be used for the present invention. When the uneven aluminum foil laminate was mounted to the microwave irradiation apparatus, the mounting was conducted in the sequence of ① the upper face (Face-A) in the range, ② the left side face (Face-E; when viewed from the front side of the H2500) in the range, ③ the front face (Face-C) in the range, and ④ the right side face (Face-F; when viewed from the front side of the H2500) in the range.

In this Example, there were investigated and compared the respective results obtained in the cases of: (a) a case wherein a reaction was conducted while effecting microwave irradiation by using the H2500 to which the above uneven aluminum foil laminate had been mounted; (b) a case wherein a reaction was conducted while effecting microwave irradiation by using the H2500 to which the above uneven aluminum foil laminate had not been mounted; and (c) a case wherein a reaction was conducted without microwave irradiation (i.e., a case wherein the reaction was conducted according to the standard method, that is, the method as described in the instruction manual attached to the following reagent kit.

Hereinbelow, there is described an operation procedure (standard method) using a commercially available urine albumin measuring reagent (trade name: Albumilisa, available from Yamanouchi Pharmaceutical Co.) utilizing EIA (enzyme immunoassay) or ELISA.

1) 40 µl of each of standard albumin solutions having various concentrations or urine specimens was poured into each of wells of an empty micro-plate (or test tubes) which had been separately provided in advance, 200 µl of an enzyme-labelled albumin solution was then added into the well, and the resultant mixture was subjected to mixing by means of a micro-plate mixer (hereinafter, referred to as "mixer").

2) All of the wells of a separate micro-plate were washed two times with a diluted washing liquid. At this time, at least 250 µl of the diluted washing liquid was used per one well.

3) 200 µl of the mixture liquid prepared in the above step ① was added to each of the wells which had been washed in the above step ②, the resultant mixtures were subjected to mixing by means of a mixer, and then were allowed to react at room temperature for 45 minutes (when microwave irradiation was used, the reaction was conducted at 25 °C for 10 minutes).

4) After the reaction, the above micro-plate was slanted to remove the liquid component contained in the respective wells, and then the wells were washed three times with a diluted washing liquid.

5) 200 µl of a color-forming substrate solution was added into each of the wells of the micro-plate, the resultant mixtures were subjected to mixing by means of a mixer, and then were allowed to react at room temperature for 30 minutes (when microwave irradiation was used, the reaction was conducted at 25 °C for 20 minutes).

6) 50 µl of a reaction-stopping solution was added into each of the wells, and mixed therein by means of a mixer thereby to stop the reaction.

7) With respect to each of the thus obtained reaction mixtures, the absorbance thereof was measured at a wavelength of 405 nm, within 24 hours counted from the stopping of the reaction.

The resultant data based on the measurement using the above standard albumin solution were plotted in a semi-logarithmic graph paper, thereby to obtain a standard or calibration curve. Subsequently, the albumin concentration in each of the specimens was determined by using the standard curve.

The set conditions for the range (H2500) used in the above procedure are shown in the following Table 2.

(Table 2)

| CONDITION SETTING FOR BIO-RAD H2500 MICROWAVE PROCESSOR | |
|---|---|
| SP (SET POINT) | 25 |
| OP (OUTPUT WATT) | 80 |
| PB% | 3 |
| RESET | 2.00 |
| RATE | 0.00 |
| SP HI (HIGHEST SET TEMP) | 26 |
| SP Lo (LOWEST SET TEMP) | 24 |
| POWER MAX (OUTPUT WATT) | 80 |
| CYCLE TIME | 2 |
| ALARM | -1 |

(Results)

With respect to a trace amount of urine albumin, xx investigations and comparisons were conducted by using the following six sets of conditions (inclusive of the standard method).

1) Standard method (a method described in an instruction manual attached to the kit): First reaction (antigen-antibody reaction) room temperature for 45 minutes; Second reaction (enzyme-substrate reaction) room temperature for 30 minutes;

2) Microwave irradiation method (without the modification of the inner wall of the range): First reaction, 25 °C for 10 minutes; Second reaction 25 °C for 20 minutes;

3) Microwave irradiation method (only one face of the upper face (Face-A) of the range inside was modified): First reaction, 25 °C for 10 minutes; Second reaction, 25 °C for 20 minutes;

4) Microwave irradiation method (the upper face (Face-A) and the left side face (Face-E) of the range inside were modified): First reaction 25 °C for 10 minutes; Second reaction, 25 °C for 20 minutes;

5) Microwave irradiation method (the upper face (Face-A), the left side face (Face-E) and the front face (Face-C) of the range inside were modified): First reaction, 25 °C for 20 minutes; Second reaction, 25 °C for 20 minutes;

6) Microwave irradiation method (the upper face (Face-A), the left side face (Face-E), the front face (Face-C), and the right side face (Face-F) of the range inside were modified): First reaction, 25 °C for 10 minutes; Second reaction, 25 °C for 20 minutes.

The measurements were conducted under the above six sets of conditions, the resultant data obtained by the standard method and the respective microwave irradiation methods were investigated and compared with each other, with respect to the coefficient of variation of simultaneous reproducibility. The results are shown in the following Tables of (Table 3) to (Table 8).

(Table 3)

| BASIC DATA (URIN ALBUMIN ELISA) | | | | | | | | | | | |
|---|---|---|---|---|---|---|---|---|---|---|---|
| ① STANDARD METHOD (FIRST REACTION 45MIN., SECOND REACTION 30MIN.,ROOM TEMP | | | | | | | | | | | |
| ABSORBANCE | | | | | | | | | | | |
| | COL1 | COL2 | COL3 | COL4 | COL5 | COL6 | COL7 | COL8 | COL9 | COL10 | COL11 | COL12 |
| A | 1478 | 445 | 412 | 437 | 407 | 416 | 413 | 416 | 413 | 422 | 434 | 418 |
| B | 1491 | 461 | 422 | 431 | 415 | 419 | 425 | 419 | 410 | 430 | 416 | 435 |
| C | 1309 | 337 | 434 | 435 | 434 | 428 | 420 | 424 | 421 | 424 | 421 | 424 |
| D | 1345 | 341 | 437 | 425 | 429 | 446 | 437 | 426 | 456 | 424 | 428 | 429 |
| E | 1011 | 443 | 481 | 430 | 429 | 446 | 437 | 426 | 456 | 424 | 428 | 429 |
| F | 1010 | 528 | 436 | 434 | 438 | 425 | 442 | 426 | 419 | 417 | 419 | 431 |
| G | 726 | 457 | 440 | 433 | 431 | 431 | 426 | 428 | 426 | 424 | 421 | 428 |
| H | 674 | 432 | 427 | 424 | 427 | 424 | 419 | 416 | 413 | 410 | 411 | 405 |

N=84,$\overline{X}$=428.7,S.D.=16.2.C.V.=3.79%
CONVERSION INTO CONCENTRATION ;
N=84,$\overline{X}$=60.3 (mg/l),S.D=3.78,C.V.=6.26%

(Table 4)

| ② MICROWAVE IRRADIATION METHOD (WITHOUT MODIFICATION, FIRST REACTION 10MIN, SECOND REACTION 20MIN., 25°C) | | | | | | | | | | | |
|---|---|---|---|---|---|---|---|---|---|---|---|
| ABSORBANCE | | | | | | | | | | | |
| | COL1 | COL2 | COL3 | COL4 | COL5 | COL6 | COL7 | COL8 | COL9 | COL10 | COL11 | COL12 |
| A | 1296 | 444 | 421 | 428 | 418 | 426 | 420 | 416 | 413 | 420 | 413 | 425 |
| B | 1326 | 454 | 449 | 430 | 437 | 434 | 418 | 423 | 424 | 416 | 409 | 420 |
| C | 1121 | 354 | 443 | 437 | 429 | 425 | 420 | 430 | 420 | 426 | 442 | 483 |
| D | 1078 | 364 | 455 | 439 | 451 | 434 | 441 | 445 | 433 | 440 | 431 | 416 |
| E | 901 | 465 | 430 | 434 | 434 | 432 | 427 | 423 | 435 | 418 | 440 | 541 |
| F | 864 | 459 | 438 | 454 | 445 | 452 | 439 | 446 | 443 | 436 | 440 | 429 |
| G | 615 | 444 | 459 | 460 | 452 | 448 | 451 | 449 | 441 | 458 | 469 | 409 |
| H | 634 | 430 | 434 | 431 | 438 | 436 | 441 | 437 | 444 | 436 | 435 | 426 |

N=84,$\overline{X}$=438.0,S.D.=19.7,C.V.=4.49%
CONVERSION INTO CONCENTRATION ;
N=84,$\overline{X}$=58.1(mg/l),S.D.=5.69,C.V.=9.79%

(Table 5)

| ③ MICROWAVE IRRADIATION METHOD (MODIFICATION OF ONE FACE, UPPER FACE OTHER CONDITIONS ARE THE SAME AS ② ) | | | | | | | | | | | |
|---|---|---|---|---|---|---|---|---|---|---|---|
| ABSORBNCE | | | | | | | | | | | |
| COL1 | COL2 | COL3 | COL4 | COL5 | COL6 | COL7 | COL8 | COL9 | COL10 | COL11 | COL12 |
| A 1121 | 388 | 372 | 363 | 361 | 362 | 355 | 363 | 352 | 362 | 358 | 354 |
| B 1173 | 410 | 369 | 372 | 369 | 369 | 359 | 365 | 360 | 366 | 360 | 381 |
| C 1058 | 330 | 374 | 375 | 369 | 369 | 362 | 359 | 365 | 367 | 363 | 376 |
| D 1057 | 327 | 378 | 385 | 375 | 374 | 371 | 374 | 376 | 372 | 358 | 374 |
| E 833 | 369 | 381 | 381 | 386 | 381 | 369 | 367 | 364 | 372 | 358 | 374 |
| F 833 | 404 | 382 | 373 | 371 | 372 | 377 | 360 | 368 | 374 | 386 | 374 |
| G 609 | 419 | 374 | 375 | 373 | 376 | 364 | 373 | 367 | 365 | 383 | 376 |
| H 609 | 384 | 384 | 378 | 379 | 371 | 370 | 371 | 362 | 368 | 374 | 376 |

$N=84, \overline{X}=371.3, S.D.=10.2, C.V.=2.75\%$
CONVERSION INTO CONCENTRATION ;
$N=84, \overline{X}=67.4$ (mg/l), $S.D.=4.58, C.V.=6.80\%$

(Table 6)

| ④ MICROWAVE IRRADIATION METHOD (MODIFICATION OF TWO FACES, UPPER AND LEFT SIDE FACES THE OTHER CONDITIONS ARE THE SAME AS ② ) | | | | | | | | | | | |
|---|---|---|---|---|---|---|---|---|---|---|---|
| ABSORBANCE | | | | | | | | | | | |
| COL1 | COL2 | COL3 | COL4 | COL5 | COL6 | COL7 | COL8 | COL9 | COL10 | COL11 | COL12 |
| A 1310 | 436 | 416 | 416 | 429 | 419 | 424 | 418 | 426 | 440 | 429 | 439 |
| B 1279 | 442 | 416 | 416 | 429 | 425 | 418 | 427 | 425 | 426 | 432 | 438 |
| C 1171 | 329 | 416 | 428 | 424 | 427 | 418 | 419 | 428 | 429 | 429 | 451 |
| D 1174 | 333 | 421 | 429 | 424 | 424 | 417 | 420 | 417 | 428 | 442 | 450 |
| E 914 | 416 | 422 | 426 | 426 | 433 | 428 | 431 | 427 | 433 | 433 | 433 |
| F 903 | 420 | 419 | 417 | 431 | 430 | 428 | 429 | 418 | 430 | 425 | 457 |
| G 650 | 425 | 416 | 435 | 433 | 428 | 430 | 435 | 435 | 439 | 437 | 447 |
| H 661 | 424 | 428 | 425 | 430 | 438 | 427 | 431 | 433 | 434 | 431 | 435 |

$N=84, \overline{X}=423.0, S.D.=9.43, C.V.=1.97\%$
CONVERSION INTO CONCENTRATION ;
$N=84, \overline{X}=56.2$ (mg/l), $S.D.=2.26, C.V.=4.02\%$

(Table 7)

| ⑤ MICROWAVE IRRADIATION METHOD (MODIFICATION OF THREE FACES,UPPER,LEFT SIDE AND FRONT FACES, THE OTHER CONDITIONS ARE THE SAME AS ②) | | | | | | | | | | | | |
|---|---|---|---|---|---|---|---|---|---|---|---|---|
| | ABSORBANCE | | | | | | | | | | | |
| | COL1 | COL2 | COL3 | COL4 | COL5 | COL6 | COL7 | COL8 | COL9 | COL10 | COL11 | COL12 |
| A | 1328 | 449 | 412 | 408 | 413 | 413 | 406 | 413 | 408 | 425 | 409 | 422 |
| B | 1355 | 451 | 414 | 405 | 413 | 414 | 414 | 409 | 408 | 401 | 415 | 416 |
| C | 1200 | 337 | 412 | 415 | 419 | 422 | 417 | 414 | 409 | 414 | 415 | 422 |
| D | 1215 | 343 | 420 | 417 | 416 | 427 | 420 | 418 | 417 | 415 | 415 | 424 |
| E | 930 | 422 | 426 | 423 | 420 | 428 | 426 | 419 | 420 | 412 | 422 | 431 |
| F | 961 | 424 | 421 | 433 | 420 | 429 | 432 | 419 | 418 | 413 | 423 | 437 |
| G | 675 | 427 | 430 | 433 | 424 | 432 | 438 | 441 | 434 | 425 | 436 | 458 |
| H | 674 | 428 | 428 | 431 | 434 | 433 | 436 | 430 | 433 | 429 | 433 | 429 |

N=84,X̄=421.8,S.D.=9.59,C.V.=2.27%
CONUERSION INTO CONCENTRATION ;
N=84,X̄=61.0 (mg/l),S.D.=2.84,C.V.=4.66%

(Table 8)

| ⑥ MICROWAVE IRRADIATION METHOD (MODIFICATION OF FOUR FACES,UPPER,LEFT SIDE,FRONT SIDE AND RIGHT SIDE FACES, THE OTHER CONDITIONS ARE THE SAME AS ② ) | | | | | | | | | | | | |
|---|---|---|---|---|---|---|---|---|---|---|---|---|
| | ABSORBANCE | | | | | | | | | | | |
| | COL1 | COL2 | COL3 | COL4 | COL5 | COL6 | COL7 | COL8 | COL9 | COL10 | COL11 | COL12 |
| A | 1418 | 505 | 469 | 469 | 469 | 469 | 468 | 466 | 462 | 466 | 474 | 476 |
| B | 1361 | 502 | 465 | 468 | 465 | 466 | 464 | 465 | 463 | 471 | 470 | 484 |
| C | 1243 | 392 | 470 | 470 | 471 | 475 | 461 | 464 | 465 | 472 | 476 | 498 |
| D | 1241 | 392 | 474 | 486 | 477 | 475 | 482 | 474 | 470 | 477 | 479 | 491 |
| E | 970 | 476 | 480 | 484 | 471 | 477 | 474 | 467 | 473 | 476 | 486 | 496 |
| F | 1002 | 481 | 484 | 481 | 481 | 466 | 487 | 475 | 475 | 488 | 492 | 497 |
| G | 734 | 485 | 491 | 486 | 489 | 497 | 469 | 486 | 486 | 492 | 497 | 495 |
| H | 728 | 490 | 468 | 477 | 496 | 492 | 487 | 499 | 490 | 493 | 493 | 490 |

N=84,X̄=478.7,S.D.=10.62,C.V.=2.22%
CONVERSION INTO CONCENTRATION ;
N=84,X̄=61.0(mg/l),S.D.=3.12,C.V.=5.12%

Among the data shown in the above Tables 3 to 8, the data described in COL (column) 1, "A" to COL 1, "H", and COL 2, "A" to COL 2, "D" correspond to those obtained by the sampling of the standard substance each having a concentration of 2 mg/l, 4 mg/l, 10 mg/l, 25 mg/l, 50mg/l, or 100mg/l (two wells correspond to each concentration), and the data described in COL 2, "E" to COL 12, "H" correspond to those obtained by the sampling of the same specimen.

The data shown in the above Tables 3 to 8 are absorbance data of the respective wells of the microplate which were measured under each of the above condition sets (1) to (6).

In the standard method shown in ① (Table 3), the average (X) of all absorbance data of the specimens was 428.7, the standard deviation (SD) was 16.2, and the coefficient of variation (CV) was 3.79 % . When these data were converted into concentration data on the basis of the standard curve obtained by using the above standard albumin solution, the average value (X) was 60.3 mg/l, the standard deviation (SD) was 3.78 mg/l, and the coefficient of variation (CV) was 3.26 %.

In the microwave irradiation method shown in ② (Table 4; in the case without using the uneven aluminum foil laminate), the average absorbance data X = 438.0, SD = 19.7, and CV = 4.49 %. With respect to the data converted into the concentration, the average value X = 58.1 mg/l, SD = 5.69 mg/l, and CV = was 9.79 %. As a result, the reproducibilities of the data of the absorbance and data converted into the concentration were rather inferior to those of the standard method.

On the contrary, as shown in ③ (Table 5), ④ (Table 6), ⑤ (Table 7) and ⑥ (Table 8), when the uneven aluminum foil laminate was mounted to the inner face of the range and microwave irradiation was effected, the reaction times for the First and Second reactions were markedly shortened, and further, the reproducibilities of the data of the absorbance and data converted into the concentration were equal to or superior to those obtained in the standard method wherein the reaction times for the First and Second reactions were very long.

Example 4

Hereinbelow, there is described a measurement method (standard method) using a commercially available s-IgA (secretory type-IgA) EIA reagent kit (EIA s-IgA Test, available from MBL (Medical and Biological Laboratory K.K.).

1) Addition of standard human S-IgA
Two sets (each set comprising six test tubes) for determining a standard curve were provided, 0.4 ml of a buffer for reaction was poured into each of these test tubes. Then, 10 μl of each of standard human S-IgA solutions respectively having various concentrations was added to each test tube, and the resultant mixture was subjected to sufficient mixing (duplicate-type measurement was conducted for the standard curve determination). Two sets of test tubes (each set comprising one tube) were provided, and 0.4 ml of a buffer for reaction was poured into each of these test tubes (the reagent blank, as a control, was also subjected to the measurement of absorbance).
2) Addition of specimen

a) Blood serum was diluted twice, and saliva was diluted 40 times with a buffer for reaction, and were subjected to quantitative determination.
b) 0.4 ml of a buffer for reaction was poured into each of test tubes for specimen, then 10 μl of the above diluted specimen was added thereto, and the resultant mixture was subjected to sufficient mixing (duplicate-type measurement was conducted for the specimen measurement).

3) First reaction

a) Polystyrene balls to which an antibody had been bonded were lightly sandwiched with tweezers one by one, and an excess of liquid attached thereto was absorbed into a filter paper, etc., and then the ball was added into each of the test tubes as prepared above.
b) Each of the test tubes was warmed for 1 hour at 37 °C while being left standing by means of an incubator (Incubator Model IS-41 mfd. by Yamato Kagaku Co.) (when microwave irradiation was conducted, the test tubes were warmed at 37 °C for 30 minutes while being left standing).

4) Washing
After the reaction was completed, the reaction mixture was immediately removed by an aspirator. Subsequently, 1 ml of PBS (phosphate buffer) which had been prepared by a solving operation was added to each test tube. Then, the test tube was sufficiently shaken, and the PBS was again removed by an aspirator (this operation was repeated twice).
5) Second reaction

a) 0.3 ml of human IgA labelled with an enzyme was added to the above test tube from which the PBS had been removed.
b) The test tube was left standing for one hour at room temperature (when microwave irradiation was conducted, the test tube was left standing at 25 °C for 30 minutes).

6) Washing
Washing operation was repeated three times in the same manner as in the above washing operation to be conducted after the First reaction.
7) Enzymatic reaction

a) Before the completion of the Second reaction, test tubes for an enzymatic reaction were newly provided, and 0.5 ml of an enzyme-substrate solution prepared in advance was poured into each of them.

b) The polystyrene ball after the above washing operation had been completed was immediately transferred into the test tube which had been prepared in the above step (a).

c) The test tube was left standing for 30 minutes at room temperature (when microwave irradiation was conducted, the test tube was left standing at 25 °C for 20 minutes).

8) Stopping of reaction

After the enzymatic reaction was completed, 2 ml of a reaction-stopping solution which had been prepared by dilution was added to each of the test tubes, thereby to stop the reaction.

9) Absorbance measurement

After the reaction was stopped, the contents in the respective test tubes were sufficiently mixed. Thereafter, the absorbance of each test tube was measured at 492 nm by means of a spectrophotometer (Spectrophotometer TH50, mfd. by Nihon DPS Co.), while using the above "reagent blank" as a control.

10) Preparation of standard curve

The thus obtained S-IgA data (μg/ml) were plotted as the abscissa of a semi-logarithmic graph paper, and the absorbance data (492 nm) were plotted as the ordinate thereof. In this manner, the absorbance data were plotted against the respective standard human S-IgA concentrations. Thereafter, the corresponding plotted points were connected thereby to prepare a smooth standard curve.

11) Calculation of S-IgA concentration

The respective S-IgA data were calculated from the average data of specimen absorbance by use of the standard curve as prepared above. The concentrations of the S-IgA in the respective specimens were determined by multiplying the thus obtained concentration data by the magnification at the time of the specimen dilution.

The following Table 9 shows the set conditions of the range (H2500) used in this Example.

(Table 9)

| CONDITION SETTING FOR BIO-RAD H2500 MICROWAVE PROCESSOR | |
| --- | --- |
| SP (SET POINT) | 37.25 |
| OP (OUTPUT WATT) | 80 |
| PB% | 3 |
| RESET | 2.00 |
| RATE | 0.00 |
| SP HI (HIGHEST SET TEMP) | 38 |
| SP Lo (LOWEST SET TEMP) | 36 |
| POWER MAX (OUTPUT WATT) | 80 |
| CYCLE TIME | 2 |
| ALARM | -1 |

(Results)

With respect to the EIA S-IgA test, investigations were effected under the following three sets of conditions (inclusive of the standard method).

1) Standard method: First reaction, in a constant-temperature bath at 37 °C for 1 hour; Second reaction, room temperature for 1 hour; Enzymatic reaction, room temperature for 30 minutes;

2) Microwave irradiation method (without the modification of the inner wall of the range): First reaction 37 °C for 30 minutes; Second reaction, 25 °C for 30 minutes; Enzymatic reaction, 25 °C for 20 minutes;

3) Microwave irradiation method (the upper face (Face-A), the front face (Face-C), and the left and right side faces (Face-E and Face-F) of the range inside were modified): First reaction, 37 °C for 30 minutes; Second reaction, 25 °C for 30 minutes; Enzymatic reaction, 25 °C for 20 minutes;

Under the above three sets of conditions, the coefficient of variation, etc., of simultaneous reproducibility of each samples was investigated and compared with each other. The thus obtained results are shown in the following Tables of (Table 10) to (Table 12) (The samples to be used for the following investigation of the simultaneous reproducibility were different with each other in the case of ①, ② and ③. The concentrations used in this investigation were as follows.

(Concentrations of standard solution)

| No.1: | Reagent blank |
| No.2: | STD (standard) 0.000 mg/ml |
| No.3: | STD 0.070 mg/ml |
| No.4: | STD 0.280 mg/ml |
| No.5: | STD 1.100 mg/ml |
| No.6: | STD 4.400 mg/ml |
| No.7: | STD 17.800 mg/ml |
| No.8: | STD 71.000 mg/ml |

(Table 10)

| EIA s-IgA TEST (BEADS,SANDWICH METHOD) ① STANDARD METHOD(FIRST REACTION, HUMAN SECRETORY COMPONENT,ONE HOUR ; SECOND REATION,HUMAN IgA, ONE HOUR ; ENZYMATIC REACTION,O-PHENYLENEDIAMINE DIAMINE,30 MIN,) | | | | | | | | | |
|---|---|---|---|---|---|---|---|---|---|
| STANDARD LIQUID | | SAMPLE (ABSORBANCE) | | | | SAMPLE (CONVERSION INTO CONCENTRATION) | | | |
| No | Abs. | No | Abs. | No | Abs. | No | Conc. | No | Conc. |
| 1 | 0.023 | 1 | 0.569 | 24 | 0.576 | 1 | 11.2 | 24 | 11.5 |
|  | 0.028 | 2 | 0.503 | 25 | 0.470 | 2 | 8.6 | 25 | 7.6 |
|  |  | 3 | 0.590 | 26 | 0.510 | 3 | 12.2 | 26 | 8.9 |
| 2 | 0.040 | 4 | 0.615 | 27 | 0.547 | 4 | 13.5 | 27 | 10.3 |
|  | 0.036 | 5 | 0.598 | 28 | 0.567 | 5 | 12.6 | 28 | 11.1 |
|  |  | 6 | 0.606 | 29 | 0.553 | 6 | 13.0 | 29 | 10.5 |
| 3 | 0.045 | 7 | 0.588 | 30 | 0.547 | 7 | 12.1 | 30 | 10.3 |
|  | 0.042 | 8 | 0.573 | 31 | 0.506 | 8 | 11.4 | 31 | 8.8 |
|  |  | 9 | 0.569 | 32 | 0.537 | 9 | 11.2 | 32 | 9.9 |
| 4 | 0.061 | 10 | 0.576 | 33 | 0.537 | 10 | 11.5 | 33 | 9.9 |
|  | 0.061 | 11 | 0.551 | 34 | 0.545 | 11 | 10.4 | 34 | 10.2 |
|  |  | 12 | 0.468 | 35 | 0.587 | 12 | 7.5 | 35 | 12.0 |
| 5 | 0.129 | 13 | 0.567 | 36 | 0.540 | 13 | 11.1 | 36 | 10.0 |
|  | 0.138 | 14 | 0.552 |  |  | 14 | 10.5 |  |  |
|  |  | 15 | 0.530 | $\overline{X}$=0.553 |  | 15 | 9.6 | $\overline{X}$=10.63mg/ml |  |
| 6 | 0.349 | 16 | 0.562 | SD=0.0334 |  | 16 | 10.9 | SD=1.35mg/ml |  |
|  | 0.379 | 17 | 0.585 | CV=6.04% |  | 17 | 11.9 | CV=12.7% |  |
|  |  | 18 | 0.557 |  |  | 18 | 10.7 |  |  |
| 7 | 0.680 | 19 | 0.548 |  |  | 19 | 10.3 |  |  |
|  | 0.656 | 20 | 0.569 |  |  | 20 | 11.2 |  |  |
|  |  | 21 | 0.560 |  |  | 21 | 10.8 |  |  |
| 8 | 0.907 | 22 | 0.530 |  |  | 22 | 9.6 |  |  |
|  | 0.938 | 23 | 0.534 |  |  | 23 | 9.8 |  |  |

(Table 11)

| ② MICROWAVE IRRADIATION METHOD (WITHOUT MODIFICATION OF FACE, FIRST REACTION 30MIN., SECOND REACTION 30MIN., ENZYMATIC REACTION 30MIN.) | | | | | | | |
|---|---|---|---|---|---|---|---|
| STANDARD LIQUID | | SAMPLE (ABSORBANCE) | | | | SAMPLE(CONVERSION INTO CONCENTRATION) | |
| No | Abs. | No | Abs. | No | Abs. | No | Conc. | No | Conc. |
| 1 | 0.029 | 1 | 0.393 | 24 | 0.472 | 1 | 5.6 | 24 | 7.7 |
|  | 0.027 | 2 | 0.463 | 25 | 0.465 | 2 | 7.4 | 25 | 7.5 |
|  |  | 3 | 0.459 | 26 | 0.456 | 3 | 7.3 | 26 | 7.2 |
| 2 | 0.049 | 4 | 0.483 | 27 | 0.447 | 4 | 8.0 | 27 | 7.0 |
|  | 0.049 | 5 | 0.427 | 28 | 0.471 | 5 | 6.4 | 28 | 7.7 |
|  |  | 6 | 0.437 | 29 | 0.420 | 6 | 6.7 | 29 | 6.3 |
| 3 | 0.052 | 7 | 0.437 | 30 | 0.354 | 7 | 6.7 | 30 | 4.7 |
|  | 0.054 | 8 | 0.498 | 31 | 0.426 | 8 | 8.5 | 31 | 6.4 |
|  |  | 9 | 0.404 | 32 | 0.485 | 9 | 5.9 | 32 | 8.1 |
| 4 | 0.069 | 10 | 0.402 | 33 | 0.439 | 10 | 5.8 | 33 | 6.7 |
|  | 0.066 | 11 | 0.449 | 34 | 0.438 | 11 | 7.0 | 34 | 6.7 |
|  |  | 12 | 0.449 | 35 | 0.444 | 12 | 7.0 | 35 | 6.9 |
| 5 | 0.127 | 13 | 0.458 | 36 | 0.461 | 13 | 7.3 | 36 | 7.4 |
|  | 0.138 | 14 | 0.482 |  |  | 14 | 8.0 |  |  |
|  |  | 15 | 0.441 | $\bar{X}$=0.447 |  | 15 | 6.8 | $\bar{X}$=7.02mg/ml |  |
| 6 | 0.332 | 16 | 0.442 | SD=0.029 |  | 16 | 6.8 | SD=0.784mg/ml |  |
|  | 0.296 | 17 | 0.454 | CV=6.52% |  | 17 | 7.2 | CV=11.2% |  |
|  |  | 18 | 0.477 |  |  | 18 | 7.8 |  |  |
| 7 | 0.669 | 19 | 0.422 |  |  | 19 | 6.3 |  |  |
|  | 0.703 | 20 | 0.454 |  |  | 20 | 7.2 |  |  |
|  |  | 21 | 0.455 |  |  | 21 | 7.2 |  |  |
| 8 | 0.880 | 22 | 0.456 |  |  | 22 | 7.2 |  |  |
|  | 0.840 | 23 | 0.488 |  |  | 23 | 8.2 |  |  |

(Table 12)

| ③ MICROWAVE IRRDIATION METHOD (MODIFICATION OF FOUR FACES, FIRST REACTION 30MIN., SECOND REACTION 30MIN., ENZYMATIC REACTION 20MIN,) | | | | | | | |
|---|---|---|---|---|---|---|---|
| STANDARD LIQUD | | SAMPLE (ABSORBANCE) | | | | SAMPLE (CONVERSION INTO CONCENTRATION) | |
| No | Abs. | No | Abs. | No | Abs. | No | Conc. | No | Conc. |
| 1 | 0.028 | 1 | 0.488 | 24 | 0.516 | 1 | 8.8 | 24 | 9.5 |
|   | 0.027 | 2 | 0.486 | 25 | 0.516 | 2 | 8.4 | 25 | 9.5 |
|   |       | 3 | 0.510 | 26 | 0.505 | 3 | 9.3 | 26 | 9.1 |
| 2 | 0.039 | 4 | 0.495 | 27 | 0.515 | 4 | 8.7 | 27 | 9.4 |
|   | 0.036 | 5 | 0.489 | 28 | 0.493 | 5 | 8.5 | 28 | 8.7 |
|   |       | 6 | 0.524 | 29 | 0.484 | 6 | 9.8 | 29 | 8.4 |
| 3 | 0.046 | 7 | 0.476 | 30 | 0.498 | 7 | 8.1 | 30 | 8.8 |
|   | 0.043 | 8 | 0.478 | 31 | 0.482 | 8 | 8.2 | 31 | 8.3 |
|   |       | 9 | 0.492 | 32 | 0.492 | 9 | 8.6 | 32 | 8.6 |
| 4 | 0.061 | 10 | 0.491 | 33 | 0.484 | 10 | 8.6 | 33 | 8.4 |
|   | 0.064 | 11 | 0.494 | 34 | 0.509 | 11 | 8.7 | 34 | 9.2 |
|   |       | 12 | 0.472 | 35 | 0.515 | 12 | 8.0 | 35 | 9.4 |
| 5 | 0.123 | 13 | 0.518 | 36 | 0.517 | 13 | 9.5 | 36 | 9.5 |
|   | 0.121 | 14 | 0.494 |    |       | 14 | 8.7 |    |     |
|   |       | 15 | 0.472 | $\overline{X}$=0.498 | | 15 | 8.0 | $\overline{X}$=8.84mg/ml | |
| 6 | 0.335 | 16 | 0.512 | SD=0.015 | | 16 | 9.3 | SD=0.504mg/ml | |
|   | 0.333 | 17 | 0.513 | CV=2.97% | | 17 | 9.4 | CV=5.70% | |
|   |       | 18 | 0.476 |    |       | 18 | 8.1 |    |     |
| 7 | 0.663 | 19 | 0.500 |    |       | 19 | 8.9 |    |     |
|   | 0.660 | 20 | 0.507 |    |       | 20 | 9.2 |    |     |
|   |       | 21 | 0.513 |    |       | 21 | 9.4 |    |     |
| 8 | 0.906 | 22 | 0.491 |    |       | 22 | 8.6 |    |     |
|   | 0.916 | 23 | 0.497 |    |       | 23 | 8.8 |    |     |

In the above standard method shown in ① (Table 10), the coefficients of variation (CV) in the absorbance data and data converted into the concentration were CV = 6.04 %, and CV = 12.7 %, respectively. In the microwave irradiation method (without the modification of the inner wall of the range) shown in the ② (Table 11), the coefficients of variation in the absorbance data and data converted into the concentration were CV =6.52 %, and CV = 11.2 %, respectively. That is, the reproducibility in the absorbance was inferior to that in the standard method.

On the contrary, in the microwave irradiation method (in a case where four inner walls of the range were modified) shown in the above ③ (Table 12), the coefficient of variation in the absorbance was CV = 2.97 %, the coefficient of variation in the data converted into the concentration was CV = 5.70 %, both of which were excellent as compared with those in the standard method.

Example 5

Hereinbelow, there is described a measuring procedure (standard method) using a commercially available EIA (Dupan-2) measuring reagent of (Detamina-Dupan-2, available from Kyowa Medex Sales Co.). The above "Dupan-2" is a cancer marker which shows a high percentage of positive reaction in the cases of pancreatoncus, bile duct-type cancer, and hepatoma, and is one of the cancer markers to be used as an index of discrimination or diagnoses of the pancreatoncus and pancreatitis, bile duct-type cancer and bile duct-type disease.

1) 200 µl of purified water was poured into each of the wells of a micro-titer plate, and was left standing for 1 minute.

2) Each of the wells was once washed with 200 µl of a washing liquid.

3) 100 µl of a specimen-diluting well was poured into each of the wells.

4) 20 µl of specimen or any one of the respective standard solutions was poured into each of predetermined wells, so that duplicate-type measurement might be conducted.

5) The above plate was sufficiently shaken by a shaking device.

6) The bottom face of the plate was dipped in a water bath of 30 °C, and was subjected to a reaction for two hours (When microwave irradiation was conducted, the plate was subjected to the reaction at 30 °C for one hour).

7) Each of the wells was washed with 200 µl of a washing liquid three times.

8) 100 µl of an enzyme-labelled antibody solution was poured into each of the wells.

9) The bottom face of the plate was dipped in a water bath of 30 °C, and was subjected to a reaction for two hours (When microwave irradiation was conducted, the plate was subjected to the reaction at 30 °C for one hour).

10) Each of the wells was washed with 200 µl of a washing liquid four times.

11) 100 µl of a color-forming liquid was poured into each of the wells.

12) Under a light-shielding condition, the bottom face of the plate was dipped in a water bath of 30 °C, and was subjected to a reaction for two hours (When microwave irradiation was conducted, the plate was subjected to the reaction at 30 °C for one hour under the same light-shielding condition).

13) 50 µl of a reaction-stopping solution was added to each of the wells.

14) The plate was shaken by a shaking device.

15) The respective absorbances were measured at 660 nm by means of a micro-titer plate reader (spectrophotometer), and a standard curve was prepared from the resultant data based on the above standard solutions.

16) The concentrations of the antigen contained in the specimen were determined by using the above standard curve.

Sampling of above standard substance, the control substance, and specimen (sample) in this Example was conducted in accordance with the following arrangement table (Table 13).

(Table 13)

## Dupan-2 SAMPLING ARRANGEMENT TABLE

|   | COL1 |     | COL2 |      | COL3   | COL4   |                 | COL12  |
|---|------|-----|------|------|--------|--------|-----------------|--------|
| A | STD  | 0   | STD  | 200  | CONT L | Sample | ··············· | Sample |
| B | STD  | 0   | STD  | 200  | CONT M |        |                 |        |
| C | STD  | 25  | STD  | 400  | CONT H |        |                 |        |
| D | STD  | 25  | STD  | 400  | Sample |        |                 |        |
| E | STD  | 50  | STD  | 800  |        |        |                 | Sample |
| F | STD  | 50  | STD  | 800  |        |        |                 | CONT L |
| G | STD  | 100 | STD  | 1600 |        |        |                 | CONT M |
| H | STD  | 100 | STD  | 1600 | Sample | Sample |                 | CONT H |

In the above Table 13, "STD" denotes the standard substance (U/ml), and "CONT (L, M, or H)" respectively denotes the control substance (having a concentration of (low concentration, medium concentration, or high concentration). In Table 13, the data described in the position of COL 3, "D" to COL 12, "E" are those based on the same specimen.

(Results)

With respect to the above EIA Dupan-2, investigations were effected under the following three sets of conditions (inclusive of the standard method).

① Standard method: First reaction, in a water bath at 30 °C for 2 hour; Second reaction, in a water bath at 30 °C for 2 hour; Enzyme-substrate reaction, in a water bath at 30 °C for 30 minutes;
② Microwave irradiation method (without the modification of the inner wall of the range): First reaction 30 °C for 1 hour; Second reaction, 30 °C for 1 hour; Enzyme-substrate reaction, 30 °C for 30 minutes;
③ Microwave irradiation method (the upper face (Face-A), the front face (Face-C), and the left and right side faces (Face-E and Face-F) of the range inside were modified): First reaction 30 °C for 1 hour; Second reaction, 30 °C for 1 hour; Enzyme-substrate reaction, 30 °C for 30 minutes;

Under the above three sets of conditions, the coefficients of variation, etc., of simultaneous reproducibility of each samples were investigated and compared with each other. The thus obtained results are shown in the following Tables of (Table 14) to (Table 16).

(Table 14)

| INVESTIGATED DATA (EIA Dupan-2) ① STANDARD METHOD, (FIRST REACTION,30°C, TWO HOURS,SECOND REACTION 30°C,TWO HOURS, ENZYME-SUBSTRATE REACTION 30°C, 30MIN,) | | | | | | | | | | | | |
|---|---|---|---|---|---|---|---|---|---|---|---|---|
| | ABSORBANCE | | | | | | | | | | | |
| | COL1 | COL2 | COL3 | COL4 | COL5 | COL6 | COL7 | COL8 | COL9 | COL10 | COL11 | COL12 |
| A | 22 | 559 | 255 | 1134 | 985 | 1006 | 1118 | 1009 | 1010 | 1139 | 1010 | 1035 |
| B | 16 | 587 | 594 | 1078 | 1005 | 1010 | 1069 | 989 | 987 | 1079 | 1030 | 1087 |
| C | 121 | 865 | 1053 | 1037 | 1038 | 980 | 1043 | 976 | 1008 | 1055 | 1046 | 1054 |
| D | 123 | 894 | 1026 | 1019 | 1005 | 995 | 1017 | 1066 | 1012 | 1036 | 1100 | 1025 |
| E | 212 | 1174 | 1006 | 1027 | 1148 | 980 | 1023 | 1041 | 996 | 1020 | 1073 | 1087 |
| F | 220 | 1128 | 1034 | 1010 | 1062 | 1021 | 1030 | 1031 | 996 | 1018 | 1065 | 283 |
| G | 371 | 1256 | 1021 | 1026 | 1014 | 969 | 1034 | 988 | 976 | 1047 | 1076 | 657 |
| H | 369 | 1288 | 1031 | 1004 | 927 | 1013 | 1037 | 1007 | 973 | 1035 | 1035 | 1081 |
| N=74,$\overline{X}$=1029.7,S.D.=40.4,C.V.=3.92%<br>CONVERSION INTO CONCENTRATION ;<br>N=74,$\overline{X}$=624.9 (U/ml),S.D.=80.8, (U/ml),C.V.=12.9% | | | | | | | | | | | | |

(Table 15)

| ② MICRWAVE IRRADIATION METHOD (WITHOUT MODIFICATION,FIRST REACTION 30°C, ONE HOUR,SECOND REAITION 30°C,ONE HOUR, ENZYME-SUBSTRTE REACTION 30°C, 30MIN,) | | | | | | | | | | | | |
|---|---|---|---|---|---|---|---|---|---|---|---|---|
| | ABSORBANCE | | | | | | | | | | | |
| | COL1 | COL2 | COL3 | COL4 | COL5 | COL6 | COL7 | COL8 | COL9 | COL10 | COL11 | COL12 |
| A | 19 | 440 | 251 | 931 | 873 | 909 | 952 | 892 | 955 | 965 | 873 | 946 |
| B | 17 | 437 | 539 | 925 | 831 | 916 | 961 | 876 | 929 | 947 | 884 | 935 |
| C | 113 | 628 | 913 | 884 | 833 | 909 | 907 | 856 | 920 | 958 | 883 | 927 |
| D | 96 | 624 | 894 | 901 | 828 | 909 | 920 | 889 | 898 | 943 | 891 | 902 |
| E | 158 | 960 | 851 | 880 | 962 | 915 | 933 | 937 | 886 | 968 | 933 | 906 |
| F | 154 | 934 | 854 | 867 | 923 | 872 | 920 | 952 | 860 | 928 | 949 | 222 |
| G | 276 | 1097 | 848 | 901 | 926 | 852 | 923 | 934 | 854 | 924 | 927 | 494 |
| H | 279 | 1124 | 863 | 852 | 916 | 869 | 901 | 933 | 883 | 907 | 935 | 856 |
| N=74,$\overline{X}$=905.5,S.D.=35.6,C.V.=3.93%<br>CONVERSION INTO CONCENTRATION ;<br>N=74,$\overline{X}$=854.1(U/ml),S.D.=87.2(U/ml),C.V.=10.2% | | | | | | | | | | | | |

(Table 16)

| ③ MICROWAVE IRRADIATION METHOD (MODIFICATION OF FOUR FACES,UPPER,FRONT, LEFT AND RIGHT FACES,) | | | | | | | | | | | | |
|---|---|---|---|---|---|---|---|---|---|---|---|---|
| ABSORBANCE | | | | | | | | | | | | |
| | COL1 | COL2 | COL3 | COL4 | COL5 | COL6 | COL7 | COL8 | COL9 | COL10 | COL11 | COL12 |
| A | 16 | 484 | 196 | 850 | 824 | 837 | 853 | 867 | 822 | 879 | 825 | 882 |
| B | 17 | 475 | 459 | 867 | 854 | 838 | 861 | 861 | 822 | 873 | 885 | 869 |
| C | 106 | 707 | 894 | 853 | 841 | 849 | 866 | 850 | 830 | 863 | 862 | 857 |
| D | 104 | 703 | 854 | 857 | 858 | 849 | 856 | 849 | 835 | 848 | 918 | 833 |
| E | 185 | 866 | 884 | 854 | 860 | 844 | 843 | 928 | 834 | 836 | 875 | 843 |
| F | 182 | 891 | 865 | 872 | 841 | 821 | 847 | 848 | 845 | 839 | 913 | 126 |
| G | 302 | 1059 | 867 | 853 | 832 | 860 | 844 | 850 | 869 | 822 | 887 | 492 |
| H | 301 | 1068 | 860 | 875 | 843 | 833 | 853 | 853 | 840 | 844 | 863 | 806 |
| N=74,$\overline{X}$=854.6,S.D.=20.9,C.V.=2.45% <br> CONVERSION INTO CONCENTRATION ; <br> N=74,$\overline{X}$=677.9(U/ml),S.D.=52.6(U/ml),C.V.=7.76% | | | | | | | | | | | | |

In the above standard method shown in ① (Table 14), the coefficients of variation (CV) in the absorbance data and data converted into the concentration were CV = 3.92 %, and CV = 12.9 %, respectively. In the microwave irradiation method (without the modification of the inner wall of the range) shown in the ② (Table 15), the coefficients of variation in the absorbance data and data converted into the concentration were CV = 3.93 %, and CV = 10.2 %, respectively. That is, the reproducibility in the absorbance was substantially the same as that of the standard method, but a certain difference was found between this case and the standard method.

On the contrary, in the microwave irradiation method (in a case where four inner walls of the range were modified) shown in the above ③ (Table 16), the coefficient of variation in the absorbance was CV = 2.45 %, the coefficient of variation in the data converted into the concentration was CV = 7.76 %, both of which were excellent as compared with those in the standard method.

Example 6

Hereinbelow, there is described an operation procedure (standard method) using a commercially available kit (trade name: Delfia-FSH, mfd. by Krack Co. (Finland), available from Kabi-Pharmacia Diagnostics Co.) for measuring a follicle-stimulating hormone (FSH) in blood based on a time-resolved fluorescence immunoassay (TR-FIA) using a "sandwich method". The FSH is a hormone secreted from the anterior pituitary. In female, the FSH has a function of promoting the growth of the ovarian follicle, and of promoting the secretion of estrogen in association with a luteinizing hormone (LH), and in male, the FSH promotes the growth of testis. It is considered that the measurement of FSH is useful for the diagnosis of amenorrhea and infertility, and for the search of a dyscratic portion in combination with the simultaneous measurement of LH in a luteinizing hormone-releasing hormone (LH-RH) load test.

1. Preparation of reagent

① Tracer solution

An europium-labelled FSH antibody and a buffer solution were sufficiently mixed with each other in the ratios as shown in the following Table 17 in accordance with the number of tests (number of strips to be used; one FSH antibody strip corresponds to 12 tests) required for the measurement (the tracer solution had been prepared within one hour counted from the pouring thereof into the well.

(Table 17)

| NUMBER OF STRIPS USED (NUMBER) | EUROPIUM-LABELLE FSH ANTIBODDY · (µl) | BUFFER (ml) |
|---|---|---|
| 1 | 30 | 3 |
| 2 | 60 | 6 |
| 3 | 90 | 9 |
| 4 | 120 | 12 |
| 5 | 150 | 15 |
| 6 | 180 | 18 |
| 7 | 210 | 21 |
| 8 | 240 | 24 |

② Washing
The entire amount of a washing solution was mixed with 960 ml of purified water so as to be diluted 25 times.

2. Operation procedure

The measurement was basically conducted in a duplicate manner (duplicate measurement).

1) A strip to be used was set to a frame, and each of the well of the strip was once washed by means of a washer (DELFIA PLATEWASH 12960-024, mfd. by WALLAC Co.) (the washed strip was used within 30 minutes counted from the washing).
2) 25 µl of each of the respective standard substances and specimens to be measured was metered and poured in each of the wells of the strip.
3) 200 µl of a buffer was added to each of the wells.
4) The strip was subjected to incubation at room temperature for three hours by means of a shaking device (DELFIA PLATESHAKE 1296-002, mfd. by ALLAC Co.), while shaking the strip mounted to the frame in "SLOW" mode.
5) The tracer solution was prepared in the same manner as described in the above "1. Preparation of reagent".
6) The wells were washed twice with a washing liquid by means of a washer.
7) 200 µl of the tracer solution was added to each of the wells.
8) The strip mounted to the frame was shaken at room temperature for two minutes in "FAST" mode by means of a shaking device, and thereafter, was left standing so as to be incubated at room temperature for 30 minutes.
9) The wells were washed six times with a washing liquid by means of a washer.
10) 200 µl of an enhancing reagent was added to each of the wells.
11) The strip mounted to the frame was shaken at room temperature for five minutes in "SLOW" mode by means of a shaking device.
12) The fluorescent intensity was measured by means of a dedicated time-resolved fluorescence measuring apparatus (Arcus Fluorometer 1230, mfd. by WALLAC Co.). After the measurement, the measurement results were printed out.

The above measurement procedure was summarized in the following Table 18.

(Table 18)  Operation procedure for measurement

Strip after washing

↓

25 μl of standard or specimen

↓

200 μ of buffer

↓

Shaking at room temp. (three hours in "SLOW" mode)

↓

Washing wells twice in "WASH MODE 1"

↓

200 μl of tracer solution

↓

Shaking at room temp. (two min. in "FAST" mode),

and then left standing at room temp. for 30 min.

↓

Washing wells six times in "WASH MODE 2"

↓

200 μl of enhancing reagent

↓

Shaking at room temp. for 5 min. (in "SLOW" mode)

↓

Measuring fluorescence intensity by time-resolved

fluorescence measuring apparatus, and then

calculating the results.

(Results)

With respect to the follicle stimulating hormone (FSH) in blood, investigations and comparisons were effected under the following three sets of conditions (inclusive of the standard method).

① Standard method (a method according to the above operation procedure shown in Table 18).

② A method wherein the procedure was effected in the same manner as in the standard method except that the shaking for the First reaction in the standard method was not effected, but the reaction system was left standing.

③ A method wherein the procedure was effected in the same manner as in the standard method except that the shaking for the First reaction (the shaking and incubation in the above step (4)) in the standard method was not effected, but the reaction system was irradiated with microwave for three hours.

The conditions for the range (H2500) used in the above procedure are shown in the following Table 19.

(Table 19)

| CONDITION SETTING FOR BIO-RAD H2500 MICROWAVE PROCESSOR | |
|---|---|
| SP (SET POINT) | 25 |
| OP (OUTPUT WATT) | 80 |
| PB% | 3 |
| RESET | 2.00 |
| RATE | 0.00 |
| SP Hi (HIGHEST SET TEMP) | 26 |
| SP Lo (LOWEST SET TEMP) | 24 |
| POWER MAX (OUTPUT WATT) | 80 |
| CYCLE TIME | 2 |
| ALARM | -1 |

The measurement was effected under the above three sets of conditions. With respect to the resultant value of fluorescence intensity CPS (COUNT PER SECOND) obtained from six kinds of concentrations (inclusive of a concentration = 0) of the standard substance, investigations was effected in comparison with the data obtained from the standard method. The results are shown in the following Table 20.

(Table 20)

| CONCENTRATION OF STANDARD (m IU/ml) | ① METHOD | ② METHOD | ③ METHOD |
|---|---|---|---|
| 0 | 722 | 538 | 593 |
| | 748 | 503 | 583 |
| 1 | 4986 | 2917 | 4049 |
| | 4635 | 2882 | 3984 |
| 4 | 17123 | 9804 | 13426 |
| | 16607 | 10548 | 13291 |
| 16 | 60971 | 36566 | 50873 |
| | 60069 | 37416 | 50884 |
| 64 | 232574 | 137591 | 202812 |
| | 238384 | 136115 | 202236 |
| 256 | 830060 | 496650 | 705741 |
| | 840915 | 521278 | 698179 |
| UNIT : CPS | | | |

In the above Table 20, the method ① is the standard method, the method ② is a method wherein the reaction system was left standing only in the First reaction, and the method ③ is a method wherein the reaction system was not shaken but was irradiated with microwave. As shown in the above Table 20, the degree of the promotion of the reaction was in an order of ①, ③ and ②, and the difference was larger as the concentration of the standard substance was higher. The microwave irradiation method ③ showed the minimum variation in the duplicate among the methods ①, ② and ③. As described above, the microwave irradiation method ③ showed a better reactivity than that of the standing method ②, but was somewhat inferior to that of the standard method ①.

In other words, in the measurement by the time-resolved fluorescence immunoassay, in a case where shaking was applied to the reaction system during the reaction, it was found that the effect of the shaking operation was relatively large, and the reactivity at the same level as the standard method was not obtained when microwave irradiation was effected alone.

Example 8

With respect to the follicle-stimulating hormone (FSH) in blood, investigation and comparison were effected under the following five methods (inclusive of the standard method). In this Example, there were investigated the reactivity and the shortening of the reaction time as compared with those of the standard method in the case using a combination of microwave irradiation and shaking device and/or ultrasonic wave, etc.

① Standard method (time for First reaction: 3 hours, time of Second reaction (8): 30 minutes)

② The time for the First reaction was set to one and a half hours. During this reaction time, the reaction system was left standing for 5 minutes, and thereafter was shaken for one minute, and such operations were repeated. On the other hand, microwave irradiation was effected in the Second reaction. The other conditions were the same as those of the standard method.

③ The time for the First reaction was set to one and a half hours. During this reaction time, the reaction system was left standing for 5 minutes, and thereafter was irradiated with ultrasonic wave for one minute, and such operations were repeated. On the other hand, microwave irradiation was effected in the Second reaction. The other conditions were the same as those of the standard method.

④ The time for the First reaction was set to one and a half hours. During this reaction time, the reaction system was irradiated with microwave for 5 minutes, and thereafter was shaken for one minute, and such operations were repeated. On the other hand, microwave irradiation was effected in the Second reaction. The other conditions were the same as those of the standard method.

⑤ The time for the First reaction was set to one and a half hours. During this reaction time, the reaction system was irradiated with microwave for 5 minutes, and thereafter was irradiated with ultrasonic wave for one minute, and such operations were repeated. On the other hand, microwave irradiation was effected in the Second reaction. The other conditions were the same as those of the standard method.

As the irradiation apparatus for the above ultrasonic wave irradiation, there was used a commercially available ultrasonic cleaning device (ULTRASONIC CLEANER B-321, mfd. by Branson Cleaning Apparatus Co., output power: 310 watt). More specifically, a plastic rack (mfd. by Toyo Rika Sangyo K.K., width 219 mm, length 111 mm, height 64 mm) was placed on the bottom of the bath of the above ultrasonic cleaning device, and the plate wherein the reaction was conducted was placed on the rack. Thereafter, the inside of the bath was filled with a PBS buffer solution so that the liquid level of the PBS was about 2 mm higher than the liquid level of the reaction solution contained in the wells (the amount of the liquid in the wells did not overflow the height of the frame of the plate, and therefore the PBS buffer did not enter the inside of the above wells).

The measurement was effected under the above five sets of conditions, and the values of fluorescent intensity CPS obtained from five concentrations (inclusive of concentration = 0) of the standard substance were compared with those obtained from the standard method. The results are shown in the following Table 21.

(Table 21)

| CONCENTRATION OF STANDARD (m IU/ml) | ① METHOD | ② METHOD | ③ METHOD | ④ METHOD | ⑤ METHOD |
|---|---|---|---|---|---|
| 0 | 670 | 570 | 856 | 693 | 1127 |
| | 563 | 574 | 861 | 682 | 1081 |
| 1 | 5375 | 4357 | 4304 | 5012 | 5719 |
| | 5343 | 4213 | 4299 | 4981 | 5815 |
| 4 | 19681 | 16035 | 15559 | 17111 | 18168 |
| | 19449 | 16622 | 15840 | 17086 | 18042 |
| 16 | 76476 | 62318 | 59224 | 69222 | 69935 |
| | 77567 | 61716 | 60478 | 68362 | 69784 |
| 64 | 297679 | 233869 | 216437 | 257525 | 259491 |
| | 289736 | 238947 | 222862 | 259465 | 260178 |
| 256 | 1039440 | 852864 | 825488 | 911572 | 968965 |
| | 1024290 | 876623 | 818023 | 912729 | 970081 |
| UNIT : CPS | | | | | |

The unit used in above Table 21 is CPS. As shown in the above Table 21, when the CPS values for the respective concentrations of the standard substance were measured in accordance with the respective methods, and the resultant reactivities thereof were compared with each other, it was found that the order of the reactivity was ①, ⑤, ④, ②, and ③. In comparison with the standard method, it was found that the variation in the duplicate measurement was reduced in the case of ② and ③ wherein microwave irradiation was effected in the Second reaction, and in the case of ④ and ⑤ wherein microwave irradiation was effected in both of the First and Second reactions. In addition, in the cases of ④ and ⑤ wherein microwave irradiation was effected in combination with the shaking or ultrasonic wave in the First reaction, it was found that the reaction time was shortened and further the reactivity which was substantially the same as that of the standard method was obtained.

The set conditions for the range (H2500) used in the above procedure are shown in the following Table 22.

(Table 22)

| CONDITION SETTING FOR BIO-RAD H2500 MICROWAVE PROCESSOR | |
|---|---|
| SP (SET POINT) | 25 |
| OP (OUTPUT WATT) | 80 |
| PB% | 3 |
| RESET | 2.00 |
| RATE | 0.00 |
| SP Hi (HIGHEST SET TEMP) | 26 |
| SP Lo (LOWEST SET TEMP) | 24 |
| POWER MAX (OUTPUT WATT) | 80 |
| CYCLE TIME | 2 |
| ALARM | -1 |

**Industrial Applicability**

As described hereinabove, according to the present invention, there is provided a microwave irradiation method which is capable of accelerating and uniformizing a reaction in a liquid medium, while retaining a good quantitative property.

The present invention also provides a microwave irradiation apparatus which is suitably usable for the above microwave irradiation method.

The microwave irradiation method and microwave irradiation apparatus according to the present invention is widely applicable to a general reaction system (such as biochemical reaction system) wherein the acceleration and uniformizing of a reaction in a liquid medium is effective.

**Claims**

1. A microwave irradiation method wherein a reaction in a liquid medium is conducted while irradiating the liquid medium with microwave in a microwave irradiation chamber, by means of a microwave irradiation apparatus having the microwave irradiation chamber and a microwave-generating source for supplying microwave to the microwave irradiation chamber; at least one face constituting the inside of the microwave irradiation chamber of the microwave irradiation apparatus comprising an uneven surface.

2. A microwave irradiation method according to Claim 1, wherein the liquid medium comprises water as a main component.

3. A microwave irradiation method according to Claim 1, wherein the reaction is conducted for the purpose of quantitatively determining an object to be measured.

4. A microwave irradiation method according to Claim 1, wherein the reaction is a biochemical reaction.

5. A microwave irradiation method according to Claim 4, wherein the reaction is an antigen-antibody reaction.

6. A microwave irradiation method according to Claim 4, wherein the reaction is an enzyme-substrate reaction.

7. A microwave irradiation method according to Claim 1, wherein microwave irradiation is repeated plural times while effecting a shaking operation which is interposed between the microwave irradiation operations.

8. A microwave irradiation method according to Claim 1, wherein ultrasonic wave is supplied to the liquid medium simultaneously with the microwave irradiation, or is supplied to the liquid medium so as to provide no overlapping with the microwave irradiation.

9. A microwave irradiation apparatus, comprising:
   a microwave irradiation chamber having at least one opening; and
   a microwave-generating source for supplying microwave to the microwave irradiation chamber;
   wherein at least one face constituting the inside of the microwave irradiation chamber comprises an uneven surface.

10. A microwave irradiation apparatus, comprising:
   a main body having an openable door disposed in a front opening thereof; and
   a microwave-generating source for supplying microwave to a microwave irradiation chamber provided in the main body;
   wherein at least one face constituting the inside of the microwave irradiation chamber comprises an uneven surface.

# *Fig. 1*

# Fig.2

# Fig.3

# Fig.4

## Fig.5

## Fig.6

| INTERNATIONAL SEARCH REPORT | International application No. |
|---|---|
| | PCT/JP94/00756 |

**A. CLASSIFICATION OF SUBJECT MATTER**

Int. Cl$^5$  B01J19/12, B01J19/10

According to International Patent Classification (IPC) or to both national classification and IPC

**B. FIELDS SEARCHED**

Minimum documentation searched (classification system followed by classification symbols)

Int. Cl$^5$  B01J19/12, B01J19/10

Documentation searched other than minimum documentation to the extent that such documents are included in the fields searched

| | |
|---|---|
| Jitsuyo Shinan Koho | 1926 – 1994 |
| Kokai Jitsuyo Shinan Koho | 1971 – 1994 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 2-66497 (Power Reactor and Nuclear Fuel Development Corporation), March 6, 1990 (06. 03. 90), 5th line from the bottom lower left column to line 3, lower right column, page 2, (Family: none) | 1-10 |
| A | JP, B2, 3-39019 (Toshiba Corp.), June 12, 1991 (12. 06. 91), Lines 18 to 27, column 3, (Family: none) | 1-10 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| August 25, 1994 (25. 08. 94) | September 13, 1994 (13. 09. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)